# EUROPÄISCHE PATENTANMELDUNG

(11) **EP 1 564 545 A1**
(43) Veröffentlichungstag der Anmeldung: **17.08.2005**
(21) Anmeldenummer: 05002292.0
(22) Anmeldetag: 03.02.2005
(51) Int. Cl.: G01N 21/35

(54) **Infrarot-Gassensor**

(30) Priorität: 11.02.2004 DE 102004006677
(71) Anmelder: Kendro Laboratory Products GmbH, 63505 Langenselbold (DE)
(72) Erfinder: Baschant, Dieter , Dr., 06786 Vockerode (DE); Gatzmanga, Heinz, Prof. Dr., 06366 Köthen (DE); Juppe, Heinz, 06844 Dessau (DE); Stahl, Hermann, 61130 Nidderau-Ostheim (DE)
(74) Vertreter: Tomerius, Isabel, Dr. Dipl.-Chem.

(57) **Zusammenfassung**

Die Erfindung betrifft einen Infrarot-Gassensor zur Bestimmung der Konzentration eines Infrarotstrahlung absorbierenden Messgases, der ein Sensorgehäuse umfasst, in dem sich zwei Infrarotstrahlungsdetektoren befinden, welche benachbart an einem Ende eines Messstrahlengangs angeordnet sind, an dessen anderem Ende sich eine Infrarotstrahlung aussendende Messstrahlungsquelle befindet. In dem Messstrahlengang ist erfindungsgemäß eine Messkammer, welche dem Messgas zugänglich ist, zwischen der Messstrahlungsquelle und den Detektoren mit Abstand zu den Detektoren angeordnet und gegenüber dem restlichen Messstrahlengang durch wenigstens ein infrarotdurchlässiges Fenster im Wesentlichen gasdicht abgedichtet. Dabei ist einem Detektor, welcher als Messdetektor fungiert, ein Interferenzfilter vorgeschaltet, dessen Transmissionsbereich bei Wellenlängen liegt, welche durch das Messgas absorbiert werden, und dem anderen Detektor, welcher als Referenzdetektor fungiert, ist ein Interferenzfilter vorgeschaltet, dessen Transmissionsbereich bei Wellenlängen liegt, welche von in der Messkammer und im Messstrahlengang vorhandenem Gas nicht absorbiert werden. Weiter ist die Erfindung dadurch gekennzeichnet, dass im Inneren des Gehäuses außerdem eine Hilfsstrahlungsquelle angeordnet ist, wobei sich zwischen dieser und den Detektoren ein Hilfsstrahlengang befindet, welcher dem Messgas nicht zugänglich ist und welcher verbunden ist mit dem dem Messgas nicht zugänglichen Teil des Messstrahlenganges, so dass in dem gesamten, dem Messgas nicht zugänglichen Teil des Messstrahlenganges und dem Hilfsstrahlengang die gleiche Gaszusammensetzung vorliegt, wobei die Anordnung so gewählt ist, dass Mess- und Referenzdetektor optische Signale sowohl von der Messstrahlungsquelle als auch von der Hilfsstrahlungsquelle empfangen können.

## Beschreibung

Die Erfindung betrifft einen Infrarot-Gassensor zur Bestimmung der Konzentration eines Infrarotstrahlung absorbierenden Messgases, welcher ein Sensorgehäuse umfasst, in dem sich zwei Infrarotstrahlungsdetektoren befinden, welche benachbart an einem Ende eines Messstrahlenganges angeordnet sind, an dessen anderem Ende sich eine Infrarotstrahlung aussendende Messstrahlungsquelle befindet, wobei in diesem Messstrahlengang zwischen der Messstrahlungsquelle und den Detektoren eine Messkammer, welche dem Messgas zugänglich ist, mit Abstand zu den Detektoren angeordnet und gegenüber dem restlichen Messstrahlengang durch wenigstens ein infrarotdurchlässiges Fenster im Wesentlichen gasdicht abgedichtet ist; wobei einem Detektor, welcher als Messdetektor fungiert, ein Interferenzfilter vorgeschaltet ist, dessen Transmissionsbereich bei Wellenlängen liegt, welche durch das Messgas absorbiert werden, und dem anderen Detektor, welcher als Referenzdetektor fungiert ein Interferenzfilter vorgeschaltet ist, dessen Transmissionsbereich bei Wellenlängen liegt, welche von in der Messkammer und im Messstrahlengang vorhandenem Gas nicht absorbiert werden.

Das Prinzip der Konzentrationsmessung von Gas durch Infrarotabsorption ist grundsätzlich bekannt. Auch der Aufbau von optischen Gasanalysatoren und die Anwendung der Messverfahren auf kompakte Infrarot-Gassensoren ist in der Literatur vielfach beschrieben. Als Beispiele seien hier erwähnt: Staab, J.: Industrielle Gasanalyse, Oldenbourg Verlag München, Wien 1994; Wiegleb u.a.: Industrielle Gassensorik, expert verlag, Renningen-Malmsheim 2001, sowie die Druckschriften DE 102 21 708 A1, DE 298 00 070 U1, DE 39 18 994 C1, DE 197 13 928 C1 und DE 101 38 302 A1.

Die bekannten Messverfahren beruhen auf dem Prinzip, dass die Absorption von Infrarotstrahlung durch ein Gas für bestimmte Wellenlängen der Anzahl der Gasmoleküle innerhalb eines durchstrahlten Volumens proportional ist. Ein einfacher Aufbau eines Sensors zur Konzentrationsmessung besteht aus einer dem Gas, dessen Konzentration zu bestimmen ist, zugänglichen Kammer an deren einer Seite sich eine Infrarotstrahlungsquelle befindet und an deren gegenüberliegender Seite sich Strahlungsdetektoren befinden, welche einerseits Strahlung einer Wellenlänge, welche durch das Gas absorbiert wird, und andererseits Strahlung einer Referenzwellenlänge, welche durch das Gas nicht absorbiert wird, detektieren. Solche einfachen Aufbauten und die in der Literatur beschriebenen Sensoren und Messverfahren sind jedoch meistenteils nur für Einsatztemperaturen unter 80 °C geeignet, da insbesondere Strahlungsempfänger und Messelektronik bei höheren Temperaturen beschädigt werden könnten. Für Messungen von Gas höherer Temperatur, aber auch für Sterilisationsvorgänge ist aber eine Einsetzbarkeit auch bei höheren Temperaturen wünschenswert. Für eine bessere Temperaturverträglichkeit werden daher Totvolumina zwischen Gasmessstrecke und Strahlungssender und Strahlungsempfänger eingebaut. Solche Aufbauten sind in der Regel sehr aufwändig oder aber ebenfalls in ihrem Temperaturbereich begrenzt. Zusätzlich treten durch Ausgasungseffekte oder Adsorptions-/Desorptionseffekte infolge hoher Temperaturbelastungen beispielsweise bei der Sterilisation auch Störgaskonzentrationen sowohl in den Totvolumina als auch in den Strahlungsdetektoren auf. Dies ist insbesondere bei der wichtigen CO₂-Messung der Fall. Durch Absorptionen an den Störgaskonzentrationen in den Totvolumina wird das Ergebnis der Absorptionsmessung der Gasmessstrecke verfälscht. Die gemessene Absorption kann nur dann als Maß für die Konzentration des Messgases in der Gasmessstrecke verwendet werden, wenn sich in den Totvolumina tatsächlich keine Messgasmoleküle befinden oder deren Konzentration zumindest stabil gehalten werden kann. Andernfalls würde auch bei einer Gaskonzentration null in der Gasmessstrecke ein von null verschiedener Messwert gebildet werden. Zur Korrektur einer solchen Nullpunktverschiebung ist es erforderlich, zu unterscheiden, ob die Verschiebung auf eine Dejustage der Optik zurückzuführen ist und durch eine reine Nullpunktsjustage korrigiert werden kann, oder ob die Verschiebung durch eine Störgaskonzentration in den Totvolumina zustande kommt. Aufgrund von Linearitätseigenschaften und Empfindlichkeit des Systems muss in diesem Fall in der Regel eine Mehrpunktkalibrierung durchgeführt werden. Für diese Unterscheidung ist eine Kenntnis über die Gaszusammensetzung und die Absorption in den Totvolumina notwendig.

Wenn Änderungen der Gaskonzentration in den Totvolumina nur aufgrund hoher Temperaturen während Sterilisationsvorgängen auftreten, ist es ausreichend, diese Entscheidung auf diskontinuierlich arbeitende Korrekturverfahren nach jeder Sterilisation zu begrenzen. Wenn andernfalls die Gaskonzentrationen in den Totvolumina aufgrund von Undichtigkeiten in der Gasführung oder aufgrund Ausgasungseffekten während der Messung kurzfristig schwanken, so muss dieser Entscheidungsprozess kontinuierlich in das Messverfahren einbezogen werden.

Dementsprechend ist es **Aufgabe** der Erfindung, einen Infrarot-Gassensor anzugeben, der hohen Temperaturen ausgesetzt werden kann und trotz möglicher Ausgasungen und partieller Undichtheiten des Systems über lange Zeit eine hohe Messgenauigkeit gewährleistet, welcher kompakt aufgebaut ist und gleichzeitig preiswert hergestellt werden kann. Zusätzlich ist es Aufgabe der Erfindung, ein Verfahren zur Bestimmung der Konzentration eines Infrarotstrahlung absorbierenden Gases mit einem solchen Infrarot-Gassensor anzugeben.

Die Aufgabe wird durch die Erfindung gemäß dem unabhängigen Sachanspruch 1 sowie durch ein Verfahren gemäß dem unabhängigen Verfahrensanspruch 11 gelöst. Vorteilhafte Weiterbildungen und Verfahrensvarianten der Erfindung sind in den abhängigen Ansprüchen ausgeführt.

Ein erfindungsgemäßer Infrarot-Gassensor zur Bestimmung der Konzentration eines Infrarotstrahlung absorbierenden Messgases umfasst ein Sensorgehäuse, in dem sich zwei Infrarotstrahlungsdetektoren befinden, welche benachbart an einem Ende eines Messstrahlengangs angeordnet sind, an dessen anderem Ende sich eine Infrarotstrahlung aussendende Messstrahlungsquelle befindet. In dem Messstrahlengang ist erfindungsgemäß eine Messkammer, welche dem Messgas zugänglich ist, zwischen der Messstrahlungsquelle und den Detektoren mit Abstand zu den Detektoren angeordnet und gegenüber dem restlichen Messstrahlengang durch wenigstens ein infrarotdurchlässiges Fenster im Wesentlichen gasdicht abgedichtet. Dabei ist einem Detektor, welcher als Messdetektor fungiert, ein Interferenzfilter vorgeschaltet, dessen Transmissionsbereich bei Wellenlängen liegt, welche durch das Messgas absorbiert werden, und dem anderen Detektor, welcher als Referenzdetektor fungiert, ist ein Interferenzfilter vorgeschaltet, dessen Transmissionsbereich bei Wellenlängen liegt, welche von in der Messkammer und im Messstrahlengang vorhandenem Gas nicht absorbiert werden. Weiter ist die Erfindung dadurch gekennzeichnet, dass im Inneren des Gehäuses außerdem eine Hilfsstrahlungsquelle angeordnet ist, wobei sich zwischen dieser und den Detektoren ein Hilfsstrahlengang befindet, welcher dem Messgas nicht zugänglich ist und welcher verbunden ist mit dem dem Messgas nicht zugänglichen Teil des Messstrahlenganges, so dass in dem gesamten, dem Messgas nicht zugänglichen Teil des Messstrahlenganges und dem Hilfsstrahlengang die gleiche Gaszusammensetzung vorliegt, und dass die Anordnung so gewählt ist, dass Mess- und Referenzdetektor optische Signale sowohl von der Messstrahlungsquelle als auch von der Hilfsstrahlungsquelle empfangen können.

Dabei verläuft der Messstrahlengang zweckmäßig geradlinig innerhalb des Sensorgehäuses in direkter Linie zwischen der Messstrahlungsquelle und den Detektoren. Dadurch wird ein besonders kompakter Aufbau des Sensors erzielt. Aufwändige Strahlführungsaufbauten mit Umlenkspiegeln werden nicht benötigt. Die Detektoren sind zueinander benachbart, d. h. nebeneinander oder übereinander angeordnet. Bevorzugt grenzen sie so dicht wie möglich aneinander an, um sicherzustellen, dass beide Detektoren von der Strahlung der Mess- und der Hilfsstrahlungsquelle getroffen werden. In einer Weiterbildung sind die Detektoren gemeinsam in einem Gehäuse mit den Interferenzfiltern angebracht. Dabei kann es sich grundsätzlich um zwei gleiche Detektoren oder auch um unterschiedliche Modelle handeln. Da die beiden Detektoren Strahlung aus denselben Strahlengängen detektieren sollen, sind sie sinnvoller Weise parallel oder wenigstens annähernd parallel ausgerichtet, so dass die Strahlung in beide Detektoren unter dem gleichen Winkel eintreten kann. Falls ein Strahlteiler verwendet wird, um Strahlung aus einem Strahlenbündel auf die beiden Detektoren zu verteilen, kann auch eine Verkippung der beiden Detektoröffnungen gegeneinander sinnvoll oder notwendig sein.

Das in seiner Konzentration zu bestimmende Gas befindet sich in einer Messkammer. Diese ist im Messstrahlengang zwischen den Strahlungsdetektoren an einem Ende und der Messstrahlungsquelle am anderen Ende angeordnet. Dabei ist sie in der Regel durch zwei infrarotdurchlässige Fenster gegenüber dem übrigen Messstrahlengang gasdicht abgedichtet. Durch das erste infrarotdurchlässige Fenster auf der Seite zur Messstrahlungsquelle hin kann Infrarotstrahlung in die Messkammer eintreten. Nachdem das Messgas in der Messkammer durchstrahlt wurde, tritt sie durch das zweite Fenster in Richtung der Strahlungsdetektoren wieder aus der Kammer aus. Dadurch sind zwei Totvolumina zur thermischen Entkopplung von Messgas und optischen Komponenten im Messstrahlengang von der Messkammer abgetrennt. Das erste Totvolumen befindet sich zwischen der Messstrahlungsquelle und der Messkammer. Das zweite Totvolumen befindet sich zwischen der Messkammer und den Strahlungsdetektoren. Beide Totvolumina sind miteinander verbunden, so dass die gleiche Gasatmosphäre in ihnen vorliegt.

Für die Funktion des Sensors ist wesentlich, dass die Transmissionsbereiche der Interferenzfilter, welche vor den Messdetektor und den Referenzdetektor geschaltet werden, für das Messgas geeignet ausgewählt sind. Dabei muss der Transmissionsbereich des dem Messdetektor vorgeschalteten Interferenzfilters durchlässig sein für Wellenlängen, welche durch das in der Messkammer befindliche Messgas absorbiert werden. Das im Messdetektor empfangene Signal ist demnach durch eine Messgaskonzentration in der Messkammer geschwächt. Es wird im folgenden als Absorptionssignal bezeichnet. Um das Maß der Absorption festzustellen, wird zum Vergleich im Referenzdetektor eine Wellenlänge gemessen, welche im Messstrahlengang nicht absorbiert wird. Dass bedeutet, sie darf von keiner in der Messkammer oder in dem übrigen Messstrahlengang vorhandenen Gaskomponente absorbiert werden. Dieses Signal wird als Referenzsignal bezeichnet. Mit Hilfe von Absorptionssignal und Referenzsignal kann dann ein Messwert erzeugt werden, welcher der Anzahl der Messgasmoleküle im Messstrahlengang proportional ist.

Infrarotstrahlung, welche im Transmissionsbereich des Messdetektors liegt, kann aber auch durch Gase in den Totvolumina absorbiert werden. Solche Störgaskonzentrationen in den Totvolumina können beispielsweise durch Ausgasungseffekte oder auch durch Undichtheiten im Gasführungssystem zustande kommen. Absorptionseffekte, die aufgrund solcher Störkonzentrationen in den Totvolumina auftreten und damit das Ergebnis für die Absorption in der Messkammer verfälschen, werden mit Hilfe eines Hilfsstrahlenganges bestimmt. Auch für den Hilfsstrahlengang, der mit den Totvolumina des Messstrahlenganges verbunden ist, in dem also die gleiche Gaszusammensetzung herrscht, wird in gleicher Weise wie für den Messstrahlengang ein Absorptionswert bestimmt. Dieser wird dann zur Korrektur des Messwertes für die Messkammer benutzt. Der Hilfsstrahlengang verläuft, ebenso wie der Messstrahlengang, bevorzugt geradlinig zwischen Hilfsstrahlungsquelle und den Detektoren. Dabei überlappen sich Hilfsstrahlengang und Messstrahlengang vor den Detektoren, die sie gleichermaßen bestrahlen. Der Hilfsstrahlengang kann auch, wie unten näher ausgeführt, im Messstrahlengang enthalten sein.

Auf diese Weise kann ein Infrarotgassensor zur Bestimmung der Konzentration eines Infrarotstrahlung absorbierenden Messgases auf sehr kompakte Weise realisiert werden. Alle wesentlichen Komponenten befinden sich innerhalb eines Sensorgehäuses. Zusätzlich ist der erfindungsgemäße Infrarot-Gassensor temperaturbeständig, da die Gaskammer gegenüber den optischen Komponenten durch Totvolumina isoliert ist und dadurch eine thermische Entkopplung stattfindet. Fehler aufgrund von Störgaskonzentrationen werden durch die Messung in dem Hilfsstrahlengang korrigiert, wodurch ein korrektes Messergebnis erzielt werden kann. Durch die gemeinsame Verwendung der Detektoren für Mess- und Hilfsstrahlengang kann ein teurer zweiter Satz Detektoren für eine komplette zweite Messstrecke eingespart werden.

In einer bevorzugten Weiterbildung ist vor den Interferenzfiltern der beiden Detektoren ein Strahlteiler eingebaut, so dass die Strahlbündel, welche in den Messdetektor und in den Referenzdetektor treffen, aus ein und dem selben Strahlbündel kommen. Dies hat den Vorteil, dass Brechungs- und Randeffekte aus den Strahlengängen für ein korrektes Messergebnis keine Rolle spielen.

Vorzugsweise sind Mess- und die Hilfsstrahlungsquelle elektrisch modulierbar und getrennt ansteuerbar. Die getrennte Ansteuerbarkeit hat den Vorteil, dass die Leistungen von Mess- und Hilfsstrahlungsquelle so aufeinander abgestimmt werden können, dass bei einer Messgaskonzentration null in der Messkammer die in den Detektoren gemessenen Signale bei der Bestrahlung mit nur je einer der beiden Strahlungsquellen möglichst gleich groß sind, zumindest aber in der gleichen Größenordnung (also im Bereich einer Zehnerpotenz) liegen. Dadurch können zu große messtechnisch bedingte Fehler bei der Korrektur vermieden werden. Zusätzlich sind die Strahlungsquellen vorzugsweise elektrisch modulierbar, d. h. sie können mit bestimmten Frequenzen oder Spannungsverläufen angesteuert werden. Wenn Mess- und Hilfsstrahlungsquelle beispielsweise mit unterschiedlichen Frequenzen oder einer Phasenverschiebung betrieben werden, so können aus einem gleichzeitig für beide Strahlengänge gemessenen gemeinsamen Detektorsignal durch eine entsprechende Signalverarbeitungsvorrichtung wieder getrennte Signale für Hilfsstrahlengang und Messstrahlengang abgeleitet werden.

In einer bevorzugten Ausführung des Infrarot-Gassensors fällt die optische Achse des Messstrahlenganges und/oder die optische Achse des Hilfsstrahlenganges sowohl mit einer Flächennormalen auf die die Messdetektoröffnung umfassende Ebene als auch mit einer Flächennormalen auf die die Referenzdetektoröffnung umfassende Ebene zusammen oder bildet einen spitzen Winkel damit. In der Regel werden Mess- und Referenzdetektor gleich ausgerichtet sein und ihre Öffnungen in einer Ebene haben. Dann treffen die optischen Achsen in der die Detektoröffnungen umfassenden Ebene bevorzugt zwischen den beiden Detektoren senkrecht oder unter einem spitzen Winkel zur Flächennormalen ein. Grundsätzlich ist es günstig, wenn die Strahlung unter einem möglichst großen Winkel, nahe 90 °, auf die Detektoren trifft. Da aber Mess- und Hilfsstrahlengang unter Umständen gegeneinander um einen spitzen Winkel zwischen 0 ° und 90 ° verkippt sein können, muss auch der Eintrittswinkel in die Detektoren in diesem Bereich variieren. In bestimmten Weiterbildungen des erfindungsgemäßen Infrarot-Gassensors sind die Detektoren gemeinsam in einem Gehäuse untergebracht, in das die Strahlung durch eine einzige Öffnung eintritt. In diesem Fall kann die Gehäuseöffnung als gemeinsame Detektoröffnung aufgefasst werden. Die optischen Achsen sowohl von Mess- als auch vom Hilfsstrahlengang treffen dann senkrecht oder in einem spitzen Winkel zur Flächennormalen auf die Ebene der Gehäuseöffnung in das Gehäuse ein. Wenn Mess- und Hilfsstrahlengang in horizontaler Richtung gegeneinander verkippt sind, beziehungsweise die Strahlungsquellen horizontal nebeneinander im Sensorgehäuse angeordnet sind, ist es zweckmäßig, die beiden Detektoren vertikal übereinander anzuordnen. Die optischen Achsen der Mess- und Hilfsstrahlungsquelle treffen dann bevorzugt in der vertikalen Mitte zwischen beiden Detektoren und in der horizontalen Mitte der beiden Detektoröffnungen unter den beschriebenen Winkeln, parallel zur Flächennormalen auf die Detektoröffnungen oder im spitzen Winkel dazu auf.

Mess- und/oder Hilfsstrahlungsquelle sind vorzugsweise modulierbare thermische Strahler, insbesondere Glühlampen. Sowohl die Messstrahlungsquelle als auch die Hilfsstrahlungsquelle können zusätzlich mit einem Reflektor ausgestattet sein. Dieser kann parabolisch oder elliptisch ausgeformt sein. Dabei ist eine Dimensionierung der Reflektoren an die Entfernung zwischen Strahlungsquelle und Detektoren oder an die mittlere Entfernung der Strahlungsquellen von den Detektoren sinnvoll.

Wenn keine besonders hohen Temperaturen bei der Messung erforderlich sind, kann auf das erste Totvolumen im Messstrahlengang zwischen der Messstrahlungsquelle und der Messkammer verzichtet werden. Die Messstrahlungsquelle wird dann vorzugsweise in die Messkammer integriert. In diesem Fall ist zur Abtrennung der Messkammer von den Totvolumina nur ein infrarotdurchlässiges Fenster notwendig. Diese Ausführungsvariante zeichnet sich durch ihre besonders kompakte Bauweise aus.

In einer weiteren bevorzugten Ausführungsform sind Mess- und Hilfsstrahlengang so im Sensorgehäuse angeordnet, dass die optischen Achsen der beiden Strahlengänge sich von einem Schnittpunkt im Bereich der Detektoröffnungen zu den Strahlungsquellen hin V-förmig öffnen. Die Hilfsstrahlungsquelle bestrahlt dann an der Messkammer im Messstrahlengang vorbei beide Detektoren. Diese Variante hat den Vorteil, dass die Länge des Hilfsstrahlenganges an die Länge der Totvolumina im Messstrahlengang angepasst werden kann. Ein zusätzlicher Leistungsabgleich der Strahlungsquellen für ein vergleichbares Detektorsignal bei einer Messgaskonzentration null in der Messkammer ist dann nicht nötig.

Eine andere bevorzugte Ausführungsvariante wird durch eine noch kompaktere und einfachere Bauweise erreicht. Demnach ist die Hilfsstrahlungsquelle im Messstrahlengang zwischen der Messkammer und den Detektoren angeordnet. Messstrahlengang und Hilfsstrahlengang fallen dann teilweise zusammen. Dabei kann die Hilfsstrahlungsquelle auf der optischen Achse des Messstrahlengangs angeordnet sein oder gegenüber dem Zentrum des Strahlenganges seitlich versetzt. Wenn die Messstrahlungsquelle einen Reflektor aufweist, der die Hauptstrahlungsintensität ringförmig um die optische Achse abstrahlt, kann es sinnvoll sein, die Hilfsstrahlungsquelle direkt auf die optische Achse zu setzen. Auf diese Weise wird nur ein geringer Anteil der Messstrahlung durch die Hilfsstrahlungsquelle abgeschirmt. Wenn die Hilfsstrahlungsquelle auf der optischen Achse des Messstrahlenganges liegt, fallen optische Achse von Hilfsstrahlengang und Messstrahlengang zusammen. Wenn andererseits die Hilfsstrahlungsquelle aus dem Zentrum des Messstrahlenganges gerückt ist, verläuft die optische Achse des Hilfsstrahlenganges in einem spitzen Winkel zur optischen Achse des Messstrahlenganges. Je nach dem Vorhandensein eines ersten Totvolumens zwischen Messstrahlungsquelle und Messkammer bzw. dessen Länge ist der Hilfsstrahlengang gegenüber dem Totvolumen des Messstrahlenganges deutlich verkürzt. Eine Angleichung der im Detektor empfangenen Signale bei Bestrahlung mit nur je einer Strahlungsquelle und mit einer Messgaskonzentration null in der Messkammer muss dann über eine Leistungsansteuerung der Hilfsstrahlungsquelle oder entsprechende Positionierung der Hilfsstrahlungsquelle im Messstrahlengang erreicht werden. Die Verschiebung der Position kann eine Verlängerung oder Verkürzung des Hilfsstrahlengangs bewirken oder, durch Verschiebung quer zum Strahlengang, eine Verkippung der optischen Achse des Hilfsstrahlengangs.

In jedem Fall sollte die Strahlung der Hilfsstrahlungsquelle in Richtung auf die Detektoren hin ausgerichtet sein und eine Rückstrahlung in Richtung der Messstrahlungsquelle durch die Messkammer hindurch vermieden werden. Dies kann beispielsweise durch einen Abschattungsschirm erreicht werden.

Für dieses Ausführungsbeispiel sollte die Hilfsstrahlungsquelle vorzugsweise möglichst klein sein, so dass möglichst wenig Strahlung der Messstrahlungsquelle gegenüber dem Messdetektor abgeschattet wird. Dies kann durch eine Mikrosofitte oder durch eine speziell geformte Drahtwendel ohne Glaskolben erreicht werden. Eine Mikrosofitte kann dann zur Abschattung in Richtung der Messkammer beispielsweise in ein Rohr, zum Beispiel aus Teflon, gesteckt werden, welches zum Detektor hin ausgeschnitten ist.

Die Lösung der Aufgabe gelingt auch mit einem Verfahren zur Messung der Konzentration eines Infrarotstrahlung absorbierenden Messgases mit einem erfindungsgemäßen Infrarot-Gassensor, wobei dem Messdetektor ein Interferenzfilter vorgeschaltet ist, dessen Transmissionsbereich bei Wellenlängen liegt, die vom Messgas absorbiert werden, und dem Referenzdetektor ein Interferenzfilter vorgeschaltet ist, dessen Transmissionsbereich bei Wellenlängen liegt, die vom Messgas und anderen im Mess- und Hilfsstrahlengang vorhandenen Gaskomponenten nicht absorbiert werden. Erfindungsgemäß wird bei eingeschalteter Messstrahlungsquelle im Messdetektor ein aufgrund von Absorption durch das Messgas abgeschwächtes Absorptionssignal im Transmissionsbereich des dem Messdetektor vorgeschalteten Interferenzfilters empfangen, und im Referenzdetektor wird ein unabgeschwächtes Referenzsignal im Transmissionsbereich des dem Referenzdetektor vorgeschalteten Interferenzfilters empfangen. Diese Signale werden an eine Signalverarbeitungsvorrichtung weitergeleitet, in der aus Absorptionssignal und Referenzsignal ein Messwert generiert wird, welcher der Anzahl der Messgasmoleküle im Messstrahlengang proportional ist. Bei eingeschalteter Hilfsstrahlungsquelle wird auf gleiche Weise ein Messwert generiert, welcher der Anzahl der Messgasmoleküle im Hilfsstrahlengang proportional ist. Mit Hilfe dieses Messwertes für den Hilfsstrahlengang wird der Messwert für den Messstrahlengang dahingehend korrigiert, dass der korrigierte Messwert proportional ist zu der Anzahl der Gasmoleküle im Messstrahlengang innerhalb der Messkammer, woraus die Konzentration des Messgases in der Messkammer bestimmt wird.

Die von den Strahlungsdetektoren gelieferten Signale, welche die auf die Detektoren auftreffende Strahlungsleistung abbilden, werden zweckmäßig vorverstärkt und nachfolgend einer Signalverarbeitung zugeführt. Aus den zeitabhängigen Signalverläufen werden darin amplitudenabhängige Signale für die jeweiligen Signale abgeleitet.

Vorzugsweise wird die Messung der Absorptions- und Referenzsignale gleichzeitig für den Mess- und Hilfsstrahlengang durchgeführt. Die modulierbaren Mess- und Hilfsstrahlungsquellen werden dafür bevorzugt mit der gleichen Frequenz, aber mit einer Phasenverschiebung angesteuert, so dass aus dem Detektorsignal getrennte Signale für Mess- und Hilfsstrahlengang abgeleitet werden können. Vorzugsweise beträgt die Phasenverschiebung, mit der Mess- und Hilfsstrahlungsquelle angesteuert werden, 90°.

In einer anderen bevorzugten Verfahrensvariante werden die modulierbaren Mess- und Hilfsstrahlungsquellen mit unterschiedlichen Frequenzen angesteuert, so dass aus den gleichzeitig gemessenen Absorptions- und Referenzsignalen für Mess- und Hilfsstrahlengang getrennte Signale für Mess- und Hilfsstrahlengang abgeleitet werden können. Vorzugsweise wird die Messstrahlungsquelle mit der halben Frequenz der Hilfsstrahlungsquelle angesteuert.

Bei diesen genannten Varianten des erfindungsgemäßen Verfahrens, wobei die Messung der Absorptions- und Referenzsignale gleichzeitig für Mess- und Hilfsstrahlengang erfolgt, muss eine Trennung der Signale für Mess- und Hilfsstrahlengang durch die Signalverarbeitung erfolgen. Diese kann vorzugsweise mit Hilfe von Synchrongleichrichterpaaren oder durch digitale Signalverarbeitung geschehen. So können auch bei fluktuierenden Störgaskonzentrationen in den zur thermischen Entkopplung erforderlichen Totvolumina und/oder in dem gemeinsamen Strahlungsdetektorgehäuse korrekte Messergebnisse erzielt werden.

Wenn dagegen partielle Undichtheiten der Messkammer ausgeschlossen werden können und die Belastung durch hohe Temperaturen nicht kontinuierlich ist, kann ein diskontinuierliches Korrekturverfahren angewendet werden. In einer diskontinuierlichen Variante des Verfahrens wird für die Bestimmung des Korrekturwertes aus dem Hilfsstrahlengang die Messstrahlungsquelle abgeschaltet und die Hilfsstrahlungsquelle zugeschaltet, während für die eigentliche Messung im Messstrahlengang die Hilfsstrahlungsquelle abgeschaltet ist. Der Korrekturwert kann in vordefinierten Zeitabständen, beispielsweise einmal pro Tag, ermittelt werden. Für den Hilfsstrahlengang wird daraus ein durch Messgas hervorgerufener Absorptionsgrad oder eine im Hilfsstrahlengang vorhandene Messgaskonzentration berechnet, welche im normalen Messbetrieb, also bei eingeschalteter Messstrahlungsquelle und abgeschalteter Hilfsstrahlungsquelle, als Korrekturparameter für die Berechnung der Messgaskonzentration verwendet wird. Für diese Ausführung des Verfahrens kann ein Synchrongleichrichterpaar entfallen.

Je nach Betriebsweise der Strahlungsquellen und der Signalverarbeitung können die Amplitudenwerte der Absorptions- und Referenzsignale zum Messstrahlengang und Hilfsstrahlengang also entweder intermittierend oder gleichzeitig erfasst und Störungen durch Ausgasungseffekte oder partielle Undichtheiten korrigiert werden. Dabei erfordert die gleichzeitige Erfassung der Amplitudenwerte der Absorptions- und Referenzsignale für Messstrahlengang und Hilfsstrahlengang eine Frequenz- oder Phasendifferenz zwischen dem Modulationssignal der Messstrahlungsquelle und der Hilfsstrahlungsquelle sowie die Aufspaltung der Signalverarbeitung der zeitabhängigen Signalverläufe von Absorptions- und Referenzsignal durch jeweils zwei Synchrongleichrichter oder entsprechende digitale Filter.

Die Erfindung wird nachfolgend anhand der in den Figuren 1 bis 8 dargestellten Ausführungsbeispiele weiter erläutert.

Es zeigen schematisch:
- Fig. 1: einen erfindungsgemäßen Infrarot-Gassensor in Schnittdarstellung entlang der Ebene A-A in Figur 2;
- Fig. 2: den selben Infrarot-Gassensor in Schnittdarstellung entlang der Ebene B-B in Figur 1;
- Fig. 3: eine andere Ausführung des erfindungsgemäßen Infrarot-Gassensors mit vereinfachtem Aufbau in Schnittdarstellung entlang der Schnittebene C-C in Figur 4;
- Fig. 4: den Infrarot-Gassensor von Figur 3 entlang der Schnittebene D-D in Figur 3;
- Fig. 5: einen weiter vereinfachten und verkleinerten Infrarot-Gassensor in Schnittdarstellung entlang der Ebene E-E in Figur 6;
- Fig. 6: die Ausführung des erfindungsgemäßen Infrarot-Gassensors gemäß Figur 5 entlang der Schnittebene F-F aus Figur 5;
- Fig. 7: verschiedene mögliche Ausführungsformen der Hilfsstrahlungsquelle und deren Anordnung bezogen auf ihre Position vor einem Detektorgehäuse; und
- Fig. 8: einen erfindungsgemäßen Infrarot-Gassensor in einer Ausführung gemäß Figur 1 oder 2 zusammen mit einer Signalverarbeitung, die eine gleichzeitige Erfassung der Absorptionswerte für Mess- und Hilfsstrahlengang erlaubt.

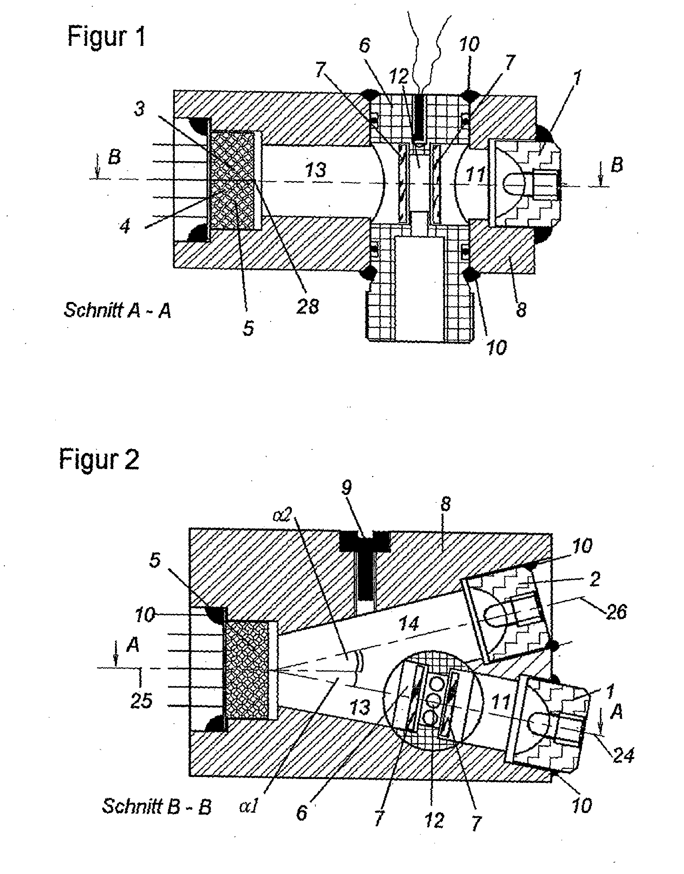

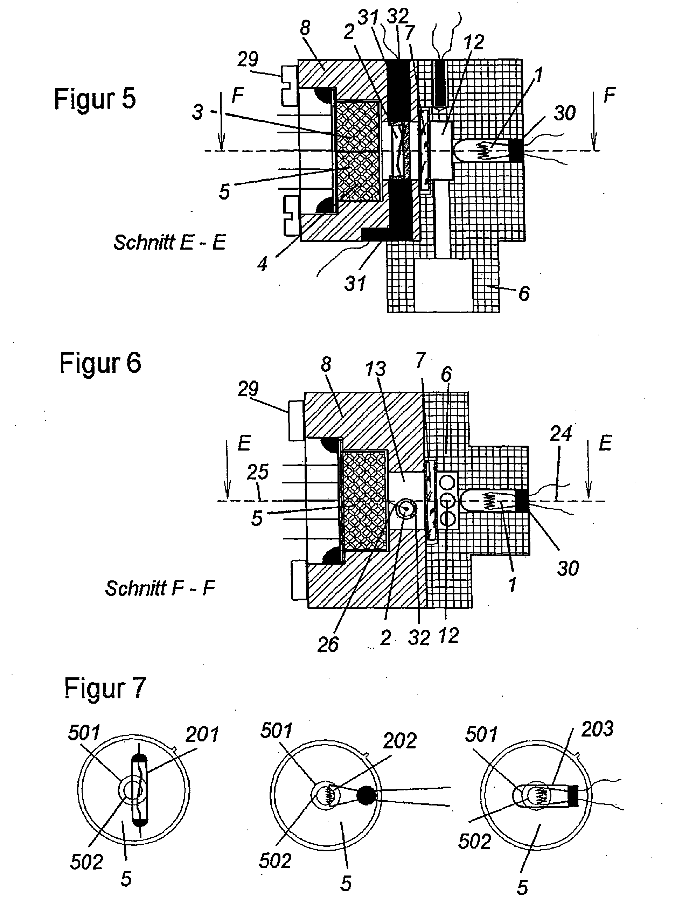

Die Figuren 1 und 2, 3 und 4 sowie 5 und 6 zeigen jeweils unterschiedliche Ausführungsformen des erfindungsgemäßen Infrarot-Gassensors. Die Ausführungsformen der Figuren 1 und 2 sowie 3 und 4 sind im Vergleich zur Ausführungsform der Figuren 5 und 6 durch eine höhere Temperaturbeständigkeit gekennzeichnet, da diese Ausführungsformen größere Abstände zwischen der Messkammer und den optischen Komponenten Messstrahlungsquelle 1 und Strahlungsdetektoren 3, 4 aufweisen. In den Darstellungen 1 bis 6 sind die beiden Strahlungsdetektoren 3 und 4 gemeinsam in einem Detektorgehäuse 5 untergebracht und daher nicht einzeln dargestellt. Bei den Ausführungsformen der Figuren 1 bis 4 befinden sich sowohl zwischen der Messkammer 6 und dem Detektorgehäuse 5 als auch zwischen der Messkammer 6 und der Messstrahlungsquelle 1 Totvolumina 11 und 13 zur thermischen Entkopplung von der Gasmessstrecke 12 und den optischen und elektronischen Komponenten. Dabei sind alle Totvolumina miteinander verbunden, so dass in allen die selbe Gaszusammensetzung herrscht.

Aus Figur 2 wird ersichtlich, dass der Infrarot-Gassensor einen Hilfsstrahlengang besitzt, welcher aus einer Hilfsstrahlungsquelle 2, einem Totvolumen 14 und den Strahlungsdetektoren 3 und 4 des Messstrahlengangs besteht. Die Strahlungsdetektoren 3 und 4 sind in einem gemeinsamen Gehäuse 5 untergebracht. Der Schnittpunkt der optischen Achse 24 des Messstrahlenganges und der optischen Achse 26 des Hilfsstrahlenganges liegt innerhalb des Detektorgehäuses 5 im Bereich der Detektoröffnungen von Mess- 3 und Referenzdetektor 4. Beide Detektoren sind hier parallel ausgerichtet, und die optische Achse 24 des Messstrahlenganges und die optische Achse 26 des Hilfsstrahlenganges bilden mit der Flächennormalen auf die die Detektoröffnungen umfassende Ebene durch die Mitte der Öffnung des Detektorgehäuses spitze Winkel α1 und α2. Die Winkel- und Längenverhältnisse der Strahlengänge sind so gewählt, dass die Hilfsstrahlungsquelle 2 an der Messkammer 6 vorbei die Strahlungsdetektoren 3 und 4 im Detektorgehäuse 5 bestrahlen kann und dass bei der Messgaskonzentration null in der Messkammer 6 die Detektorsignale bei Bestrahlung mit nur je einer Strahlungsquelle 1 oder 2 in etwa gleich groß sind. Zumindest liegen sie jedoch in der selben Größenordnung. Die nach außen nahezu gasdichten Totvolumina 11 und 13 des Messstrahlenganges und 14 des Hilfsstrahlenganges sind miteinander verbunden, so dass in dem nahezu gasdicht abgedichteten Inneren des Sensorgehäuses 8, außer im Inneren der Messkammer, überall dieselbe Gaszusammensetzung auftritt. Durch Verwendung einer Verschlussschraube 9 kann während der Kalibrierung das Innere des Sensorgehäuses auch definiert begast und im Betriebsfall nahezu gasdicht verschlossen werden.

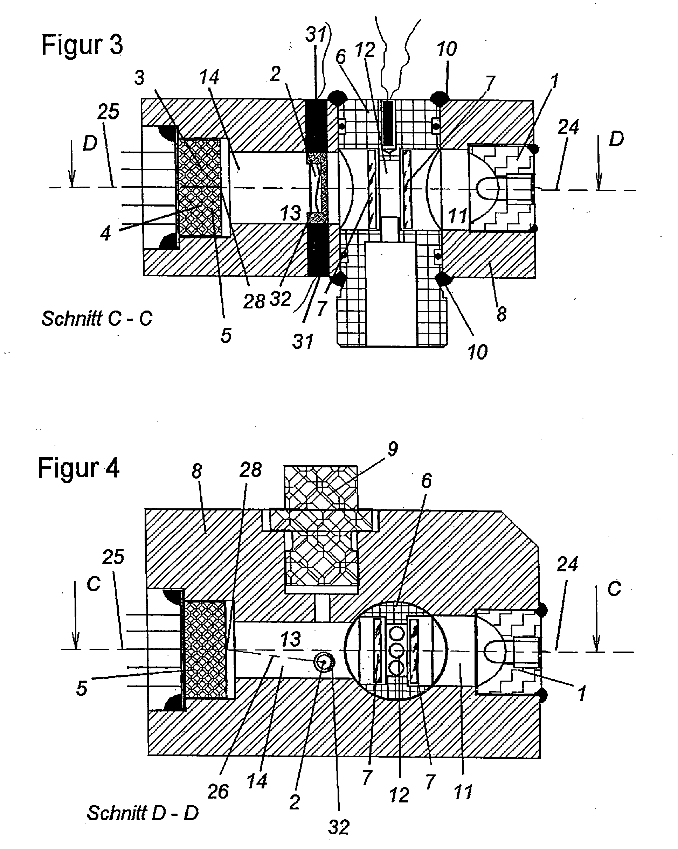

Die Figuren 3 und 4 zeigen eine einfach aufgebaute Ausführungsform des erfindungsgemäßen Infrarot-Gassensors, bei der die Hilfsstrahlungsquelle 2 mit in das zur thermischen Entkopplung von Messkammer 6 und Strahlungsdetektoren 3, 4 benötigte Totvolumen 13 eingebaut ist. Durch Wegfall der V-Form der Strahlengänge aus der Ausführungsvariante gemäß der Figuren 1 und 2 wird die Fertigung des Sensorgehäuses stark vereinfacht.

Zum Einbringen der Hilfsstrahlungsquelle 2 müssen in diesem vergleichsweise einfach gestalteten Sensorgehäuse 8 je nach Bauform der Hilfsstrahlungsquelle 2 lediglich ein oder zwei weitere Bohrungen 31 vorgesehen werden. Die Hilfsstrahlungsquelle 2 hat hier, verglichen mit der Messstrahlungsquelle, einen deutlich kürzeren Abstand zu den Strahlungsdetektoren 3 und 4. Dies eröffnet die Möglichkeit, als Hilfsstrahlungsquelle eine Glühlampe oder eine spezielle Drahtwendel ohne Reflektor einzusetzen.

Wenn Mess- 3 und Referenzdetektor 4 beispielsweise senkrecht übereinander im Detektorgehäuse 5 angeordnet sind, kann die Hilfsstrahlungsquelle so eingebaut werden, dass die die Strahlung aussendende Wendel der Hilfsstrahlungsquelle ebenfalls senkrecht gestellt ist und im Strahlengang so angeordnet wird, dass sie in vertikaler Richtung in der Mitte zwischen den Detektoren 3 und 4 und in horizontaler Richtung auf der optischen Achse 24 des Messstrahlenganges liegt. Vorzugsweise wird zwischen Hilfsstrahlungsquelle 2 und Messkammer 6 eine Abschattung vorgesehen. Eine Rückstrahlung von der Hilfsstrahlungsquelle 2 über die Gasmessstrecke 12, die über den Reflektor der Messstrahlungsquelle erneut durch die Gasmessstrecke 12 auf die Strahlungsdetektoren 3, 4 trifft, kann so vermieden werden. Wenn eine Mikrosofitte 201 als Hilfsstrahlungsquelle 2 eingesetzt wird, kann diese Abschattung dadurch unterdrückt werden, dass die Mikrosofitte vollständig in ein Teflonrohr 32 gesteckt wird, welches innerhalb des gewünschten Abstrahlbereiches ausgeschnitten ist. Der Reflektor der Messstrahlenquelle bewirkt, dass ein Großteil der auf die Apertur der Strahlungsdetektoren 3 und 4 auftreffenden Strahlung aus dem Außenbereich eines von der Messstrahlungsquelle 1 emittierten Strahlungskegels kommt. Dadurch wird die Anordnung der Hilfsstrahlungsquelle 2 im Zentrum des Messstrahlengangs 13 auf der optischen Achse 24 ermöglicht. Durch die Hilfsstrahlungsquelle 2 wird zwar immer noch ein gewisser Teil der von der Messstrahlungsquelle kommenden Strahlung abgeschattet, trotzdem wird noch ein ausreichend starkes Strahlungssignal empfangen. Auch bei einer möglichen Verschiebung der Hilfsstrahlungsquelle 2 in horizontaler Richtung, weg von der optischen Achse 24 des Messstrahlenganges, wirkt sich durch die oben beschriebene Ausrichtung der Wendel der Hilfsstrahlungsquelle 2 die Abschattung auf Mess- 3 und Referenzdetektor 4 gleichermaßen aus.

Der Abgleich des Sensorsystems aus konstruktiver und elektronischer Sicht kann in der in den Figuren 3 und 4 dargestellten Ausführungsform des Infrarot-Gassensors bei Maximierung des Abstandes zwischen den Strahlungsdetektoren 3 und 4 und der Hilfsstrahlungsquelle 2 über drei Freiheitsgrade erfolgen. Einer davon ist die bereits erwähnte Verschiebung der Position der Hilfsstrahlungsquelle 2 in horizontaler Richtung aus dem Zentrum des Messstrahlenganges heraus, so dass der in Figur 4 erkennbare Winkel zwischen der optischen Achse 24 des Messstrahlengangs und der optischen Achse 26 des Hilfsstrahlengangs entsteht. Eine weitere Möglichkeit besteht über die Ansteuerleistung der Messstrahlungsquelle 1 und eine dritte Möglichkeit über die Ansteuerleistung der Hilfsstrahlungsquelle 2. Durch diese drei Möglichkeiten kann sichergestellt werden, dass bei der Messgaskonzentration null in der Messkammer 6 die Detektorsignale bei Bestrahlung mit entweder nur der Messstrahlungsquelle 1 oder nur der Hilfsstrahlungsquelle 2 in etwa gleich groß sind, zumindest aber in der selben Größenordnung liegen.

In den Figuren 5 und 6 ist eine weiter vereinfachte und verkleinerte Ausführungsform des erfindungsgemäßen Infrarot-Gassensors gezeigt. Wenn während des Betriebs die in der Messkammer 6 auftretenden Maximaltemperaturen die Optikkomponenten (Strahlungsquellen und Detektoren) nicht zerstören, kann die Länge des Messstrahlengangs auf ein Minimum verkürzt werden, indem erstens die Messstrahlungsquelle 1 in die Messkammer 6 integriert und zweitens der Abstand zwischen Messkammer 6 und Strahlungsdetektorgehäuse 5 minimiert wird. Dies ermöglicht es, als Messstrahlungsquelle 1 eine Glühlampe ohne Reflektor einzusetzen, indem diese an der Leitungszuführung 30 direkt in das dem Messgas zugängliche Volumen 12 der Messkammer 6 eingeklebt wird. Dadurch entfällt der Totvolumenabschnitt 11 des Messstrahlenganges, und es wird nur noch ein infrarotdurchlässiges Fenster 7 benötigt. Das Sensorgehäuse 8 kann verkleinert werden und mit der Messkammer 6 an der Stirnfläche verklebt und mittels Schrauben 29 verschraubt werden. Auch bei dieser Ausführungsform wird die Hilfsstrahlungsquelle 2 mit in das Totvolumen 13 eingebaut. Als Hilfsstrahlungsquelle 2 kann wiederum vorteilhaft eine Mikrosofitte 201 verwendet werden, deren Abstrahlrichtung durch ein ausgeschnittenes Rohr 32 festgelegt wird. Die für die Ausführungsform der Figuren 3 und 4 getroffenen Aussagen zur Lage der optischen Achse 24 des Messstrahlenganges 13 und der optischen Achse 26 des Hilfsstrahlengangs 14 und der Flächennormalen 25 auf die Detektoröffnungen sowie bezüglich der Freiheitsgrade für den Abgleich des Infrarot-Gassensors gelten für die Ausführungsform gemäß den Figuren 5 und 6 analog.

In Figur 7 sind verschiedene mögliche Ausführungsformen der Hilfsstrahlungsquelle 2 für die Ausführungen des Infrarot-Gassensors gemäß den Figuren 3 bis 6 in ihrer bevorzugten Anordnung vor der Öffnung des Detektorgehäuses 5 aus Sicht der Messstrahlungsquelle 1 dargestellt. Die Darstellungen sollen für in dem Detektorgehäuse 5 senkrecht übereinander angeordnete Detektoren 3 und 4 mit einem vorgeschalteten Strahlteiler gelten. Die Hilfsstrahlungsquelle 2 muss im Strahlengang so angeordnet werden, dass sie den Messstrahlengang minimal beeinflusst und im Betriebsfall ein ausreichend starkes Messsignal an den Strahlungsdetektoren 3 und 4 generiert. Die Hilfsstrahlungsquelle 2 liefert dann ein maximales Signal an den Strahlungsdetektoren 3 und 4, wenn sie direkt vor der Öffnung 501 des Strahlungsdetektorgehäuses 5 steht. In diesem Fall blendet sie aber auch die Strahlung aus dem Messstrahlengang maximal ab.

Eine verringerte Abschattung des Strahleintritts 502 des Strahlteilers wird dann erreicht, wenn die Hilfsstrahlungsquelle 2 aus der Mitte des Strahlenganges ausgerückt wird. Das Ausrücken der Hilfsstrahlungsquelle 2 bewirkt gleichzeitig eine Abschwächung der auf die Strahlungsdetektoren 3 und 4 auftreffenden Strahlung der Hilfsstrahlungsquelle 2. Damit beim Ausrücken der Hilfsstrahlungsquelle 2 die vereinbarungsgemäß senkrecht angeordneten Strahlungsdetektoren 3 und 4 gleichmäßig von der Strahlungsschwächung getroffen werden, muss dies in horizontaler Richtung erfolgen. Damit dabei wiederum von der Hilfsstrahlungsquelle 2 ein Maximum an Strahlung auf die Strahlungsdetektoren 3 und 4 auftreffen kann, muss das Strahlungselement der Hilfsstrahlungsquelle 2 ebenfalls senkrecht stehen. Daraus ergeben sich die in Figur 7 gezeigten möglichen Bauformen und Anordnungen der Hilfsstrahlungsquelle 2 vor dem Strahlungsdetektorgehäuse 5. Dementsprechend können als Hilfsstrahlungsquelle eine Mikrosofitte 201, eine speziell angefertigte Drahtwendel 202 ohne Glaskolben oder auch eine Miniaturglühlampe 203 verwendet werden. Die Abschattung des Messstrahlenganges ist bei Verwendung einer speziell angefertigten Drahtwendel 202 ohne Glaskolben minimal und beim Einsatz einer Miniaturglühlampe 203 maximal. Bezüglich des Einbaus der Hilfsstrahlungsquelle in den Messstrahlengang sind bei der Mikrosofitte 201 zwei Bohrungen 31 vorzusehen, wogegen bei der speziell angefertigten Drahtwendel 202 und bei der Miniaturglühlampe 203 eine Bohrung ausreicht. Bezüglich der Steuerung der Strahlrichtung der Hilfsstrahlungsquelle 2 ist eine Mikrosofitte 201 am einfachsten handhabbar, weil die Mikrosofitte vor dem Einkleben in das Sensorgehäuse 8 wie oben beschrieben in ein ausgeschnittenes Rohrstück 32 gesteckt werden kann.

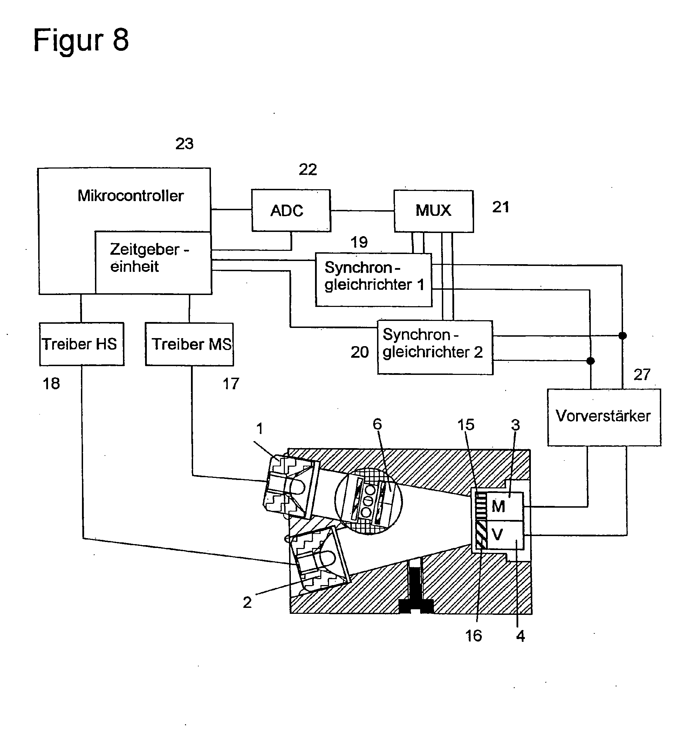

Figur 8 zeigt den erfindungsgemäßen Infrarot-Gassensor zusammen mit einer Signalverarbeitung, die eine gleichzeitige Erfassung der Amplitudenwerte der Absorptions- und Referenzsignale für Mess- und Hilfsstrahlengang bei minimaler Belastung des Mikrocontrollers 23 gestattet.

Die Ansteuerung der Messstrahlungsquelle 1 erfolgt durch die Zeitgebereinheit des Mikrocontrollers 23 über den Treiber 17, bezogen auf die Ansteuerung der Hilfsstrahlungsquelle, entweder mit einer unterschiedlichen Frequenz oder aber mit der selben Frequenz und einer Phasenverschiebung. Vorzugsweise beträgt die Phasenverschiebung in diesem Fall 90 °. Daraus ergeben sich an den Ausgängen der Strahlungsdetektoren 3 und 4 und des Vorverstärkers 27 Zeitverläufe von Absorptions- und Referenzsignal, die bei entsprechender Ansteuerung der Synchrongleichrichterpaare 19 und 20 eine Ableitung von 4 Signalen gestatten. Diese entsprechen den Amplitudenwerten von Absorptions- und Referenzsignal bei Ansteuerung allein durch jeweils eine der Strahlungsquellen. Diese Signale werden über den Multiplexer 21 und einen AD-Wandler 22 in den Mikrocontroller 23 eingelesen. Dieser berechnet daraus innerhalb jedes Berechnungszyklusses zwei durch das Messgas hervorgerufene Absorptionsgrade für den Messstrahlengang und für den Hilfsstrahlengang. Auf Grundlage von Kalibrierfunktionen werden dann in bekannter Weise zwei Messgaskonzentrationen berechnet, und nachfolgend wird der für den Messstrahlengang berechnete Rohmesswert mittels der für den Hilfsstrahlengang berechneten Konzentration korrigiert. Auf diese Weise werden auch bei fluktuierenden Störgaskonzentrationen in den zur thermischen Entkopplung erforderlichen Totvolumina 11, 13 und/oder in dem gemeinsamen Strahlungsdetektorgehäuse 5 korrekte Messwerte erhalten.

Wenn ein diskontinuierliches Korrekturverfahren angewandt werden kann, wird der benötigte Korrekturwert aus dem Hilfsstrahlengang so ermittelt, dass in vordefinierten Zeitabständen, vorzugsweise einmal pro Tag, die Messstrahlungsquelle 1 abgeschaltet und die Hilfsstrahlungsquelle 2 zugeschaltet wird. Wie oben beschrieben, wird für den Hilfsstrahlengang daraus eine durch Messgas hervorgerufene Absorption und daraus eine im Hilfsstrahlengang vorhandene Messgaskonzentration berechnet, die im Normalbetrieb, bei eingeschalteter Messstrahlungsquelle 1 und abgeschalteter Hilfsstrahlungsquelle 2, durch den Mikrocontroller 23 als Korrekturparameter für die Berechnung der Messgaskonzentration in der Messkammer verwendet wird. In diesem Fall kann das zweite Synchrongleichrichterpaar 20 entfallen. Wenn ein Mikrocontroller mit ausreichender Rechenleistung verwendet wird, kann die Filterung von Absorptions- und Referenzsignal teilweise oder vollständig digital erfolgen, so dass die analogen Synchrongleichrichterpaare 19, 20 entweder auf Analogschalter reduziert werden können oder komplett entfallen.

## Patentansprüche

1. Infrarot-Gassensor zur Bestimmung der Konzentration eines Infrarotstrahlung absorbierenden Messgases, welcher ein Sensorgehäuse (8) umfasst, in dem sich zwei Infrarotstrahlungsdetektoren (3, 4) befinden, welche benachbart an einem Ende eines Messstrahlenganges (11, 12, 13) angeordnet sind, an dessen anderem Ende sich eine Infrarotstrahlung aussendende Messstrahlungsquelle (1) befindet, wobei in diesem Messstrahlengang zwischen der Messstrahlungsquelle und den Detektoren (3, 4) eine Messkammer (6), welche dem Messgas zugänglich ist, mit Abstand zu den Detektoren (3, 4) angeordnet und gegenüber dem restlichen Messstrahlengang (11, 13) durch wenigstens ein infrarotdurchlässiges Fenster (7) im Wesentlichen gasdicht abgedichtet ist; wobei einem Detektor (3), welcher als Messdetektor fungiert, ein Interferenzfilter (15) vorgeschaltet ist, dessen Transmissionsbereich bei Wellenlängen liegt, welche durch das Messgas absorbiert werden, und dem anderen Detektor (4), welcher als Referenzdetektor fungiert, ein Interferenzfilter (16) vorgeschaltet ist, dessen Transmissionsbereich bei Wellenlängen liegt, welche von in der Messkammer (6) und im Messstrahlengang (11, 13) vorhandenem Gas nicht absorbiert werden,
**dadurchgekennzeichnet**,
**dass** im Inneren des Gehäuses (8) außerdem eine Hilfsstrahlungsquelle (2) angeordnet ist, wobei sich zwischen dieser und den Detektoren (3, 4) ein Hilfsstrahlengang (14) befindet, welcher dem Messgas nicht zugänglich ist und welcher verbunden ist mit dem dem Messgas nicht zugänglichen Teil des Messstrahlenganges (11, 13), so dass in dem gesamten, dem Messgas nicht zugänglichen Teil des Messstrahlenganges (11, 13) und dem Hilfsstrahlengang (14) die gleiche Gaszusammensetzung vorliegt, und dass die Anordnung so gewählt ist, dass Mess- (3) und Referenzdetektor (4) optische Signale sowohl von der Messstrahlungsquelle (1) als auch von der Hilfsstrahlungsquelle (2) empfangen können.

2. Infrarot-Gassensor nach Anspruch 1,
**dadurchgekennzeichnet**,
**dass** vor den Interferenzfiltern (15, 16), welche den Detektoren (3, 4) vorgeschaltet sind, ein Strahlteiler eingebaut ist, so dass die Strahlbündel, welche in den Messdetektor (3) und in den Referenzdetektor (4) treffen, aus demselben Strahlbündel kommen.

3. Infrarot-Gassensor nach einem der vorhergehendem Ansprüche,
**dadurchgekennzeichnet**,
**dass** Mess- (1) und/oder Hilfsstrahlungsquelle (2) elektrisch modulierbar sind und getrennt angesteuert werden können.

4. Infrarot-Gassensor nach einem der vorhergehenden Ansprüche,
**dadurchgekennzeichnet**,
**dass** die optische Achse des Messstrahlenganges (24) und/oder die optische Achse des Hilfsstrahlenganges (26) sowohl mit einer Flächennormalen (25) auf die die Messdetektoröffnung umfassende Ebene als auch mit einer Flächennormalen (25) auf die die Referenzdetektoröffnung umfassende Ebene zusammenfällt oder einen spitzen Winkel (α1, α2) damit bildet.

5. Infrarot-Gassensor nach einem der vorhergehenden Ansprüche,
**dadurchgekennzeichnet**,
**dass** die Messstrahlungsquelle (1) und/oder die Hilfsstrahlungsquelle (2) eine Glühlampe ist.

6. Infrarot-Gassensor nach Anspruch 5,
**dadurch gekennzeichnet,**
**dass** die Messstrahlungsquelle (1) in die Messkammer (6) integriert ist.

7. Infrarot-Gassensor nach einem der vorhergehendem Ansprüche,
**dadurchgekennzeichnet**,
**dass** Mess- und Hilfsstrahlengang (11-14) so im Sensorgehäuse (8) angeordnet sind, dass die optischen Achsen (24, 26) der beiden Strahlengänge sich von einem Schnittpunkt im Bereich der Detektoröffnungen zu den Strahlungsquellen (1, 2) hin V-förmig öffnen, so dass die Hilfsstrahlungsquelle (2), an der Messkammer (6) im Messstrahlengang (12) vorbei, beide Detektoren (3, 4) bestrahlen kann.

8. Infrarot-Gassensor nach einem der Ansprüche 1 bis 6,
**dadurch gekennzeichnet,**
**dass** die Hilfsstrahlungsquelle (2) im Messstrahlengang (13) zwischen Messkammer (6) und Detektoren (3, 4) angeordnet ist.

9. Infrarot-Gassensor nach Anspruch 8,
**dadurch gekennzeichnet,**
**dass** die Hilfsstrahlungsquelle (2) eine Mikrosofitte (201) ist oder eine Drahtwendel (202) ohne Glaskolben aufweist.

10. Infrarot-Gassensor nach einem der vorhergehendem Ansprüche,
**dadurch gekennzeichnet,**
**dass** die Hilfsstrahlungsquelle (2) verschiebbar und/oder in ihrer Leistung variabel ist.

11. Verfahren zur Messung der Konzentration eines Infrarotstrahlung absorbierenden Messgases mit einem Infrarot-Gassensor gemäß einem der vorhergehenden Ansprüche,
**dadurch gekennzeichnet,**
**dass** dem Messdetektor (3) ein Interferenzfilter (15) vorgeschaltet ist, dessen Transmissionsbereich bei Wellenlängen liegt, die vom Messgas absorbiert werden, und dass dem Referenzdetektor (4) ein Interferenzfilter (16) vorgeschaltet ist, dessen Transmissionsbereich bei Wellenlängen liegt, die vom Messgas und anderen im Mess- und Hilfsstrahlengang vorhandenen Gaskomponenten nicht absorbiert wird,
**dass** bei eingeschalteter Messstrahlungsquelle (1) im Messdetektor (3) ein aufgrund von Absorption durch das Messgas abgeschwächtes Absorptionssignal im Transmissionsbereich des dem Messdetektor vorgeschalteten Interferenzfilters (15) empfangen wird und im Referenzdetektor (4) ein unabgeschwächtes Referenzsignal im Transmissionsbereich des dem Referenzdetektor vorgeschalteten Interferenzfilters (16) empfangen wird
und **dass** diese Signale an eine Signalverarbeitungsvorrichtung weitergeleitet werden, in der aus Absorptionssignal und Referenzsignal ein Messwert generiert wird, welcher der Anzahl der Messgasmoleküle im Messstrahlengang (11, 12, 13) proportional ist, und dass bei eingeschalteter Hilfsstrahlungsquelle (2) auf gleiche Weise ein Messwert generiert wird, welcher der Anzahl der Messgasmoleküle im Hilfsstrahlengang (14) proportional ist, und mit Hilfe dieses Messwertes für den Hilfsstrahlengang (14) der Messwert für den Messstrahlengang (11, 12, 13) korrigiert wird, dahingehend, dass der korrigierte Messwert proportional ist zu der Anzahl der Gasmoleküle im Messstrahlengang (12) innerhalb der Messkammer (6) und dass daraus die Konzentration des Messgases in der Messkammer (6) bestimmt wird.

12. Verfahren zur Gaskonzentrationsmessung gemäß Anspruch 11,
**dadurchgekennzeichnet**,
**dass** die Messung der Absorptions- und Referenzsignale gleichzeitig für Mess- und Hilfsstrahlengang erfolgt, wobei die modulierbaren Mess- und Hilfsstrahlungsquellen (1, 2) mit der gleichen Frequenz, aber mit einer Phasenverschiebung angesteuert werden, so dass aus den Detektorsignalen getrennte Signale für Mess- (11, 12, 13) und Hilfsstrahlengang (14) abgeleitet werden können.

13. Verfahren zur Gaskonzentrationsmessung gemäß Anspruch 12,
**dadurchgekennzeichnet**,
**dass** die Phasenverschiebung 90 ° beträgt.

14. Verfahren zur Gaskonzentrationsmessung gemäß Anspruch 11,
**dadurchgekennzeichnet**,
**dass** die Messung der Absorptions- und Referenzsignale gleichzeitig für Mess- (11, 12, 13) und Hilfsstrahlengang (14) erfolgt, wobei die modulierbaren Mess- (1) und Hilfsstrahlungsquellen (2) mit unterschiedlichen Frequenzen angesteuert werden, so dass aus den Detektorsignalen getrennte Signale für Mess- und Hilfsstrahlengang abgeleitet werden können.

15. Verfahren zur Gaskonzentrationsmessung gemäß Anspruch 14,
**dadurch gekennzeichnet,**
**dass** die Ansteuerung der Messstrahlungsquelle (1) mit der halben Frequenz der Ansteuerung der Hilfsstrahlungsquelle (2) erfolgt.

16. Verfahren zur Gaskonzentrationsmessung gemäß einem der Ansprüche 12 bis 15,
**dadurchgekennzeichnet**,
**dass** die getrennten Signale für Mess- und Hilfsstrahlengang mit Hilfe von Synchrongleichrichterpaaren oder digitaler Signalverarbeitung abgeleitet werden.

17. Verfahren zur Gaskonzentrationsmessung gemäß Anspruch 11,
**dadurch gekennzeichnet,**
**dass** für die Bestimmung des Messwertes für den Hilfsstrahlengang (14) die Messstrahlungsquelle (1) abgeschaltet und die Hilfsstrahlungsquelle (2) zugeschaltet wird, während für die Messung im Messstrahlengang (11, 12, 13) die Hilfsstrahlungsquelle (2) abgeschaltet ist.
